Europäisches Patentamt

European Patent Office

Office européen des brevets

(11) Veröffentlichungsnummer: **0 058 379**
**B1**

(12) **EUROPÄISCHE PATENTSCHRIFT**

(45) Veröffentlichungstag der Patentschrift:
**30.05.84**

(51) Int. Cl.³: **C 08 L 25/00, C 08 L 71/04**

(21) Anmeldenummer: **82100935.4**

(22) Anmeldetag: **09.02.82**

(54) Selbstverlöschende thermoplastische Formmassen.

(30) Priorität: **18.02.81 DE 3105863**

(43) Veröffentlichungstag der Anmeldung:
**25.08.82 Patentblatt 82/34**

(45) Bekanntmachung des Hinweises auf die Patenterteilung:
**30.05.84 Patentblatt 84/22**

(84) Benannte Vertragsstaaten:
**BE DE FR GB NL**

(56) Entgegenhaltungen:
**DE - A - 2 229 550**

(73) Patentinhaber: **BASF Aktiengesellschaft,
Carl-Bosch-Strasse 38, D-6700 Ludwigshafen (DE)**

(72) Erfinder: **Brandstetter, Franz, Dr., Ritterbuechel 45,
D-6730 Neustadt (DE)**
Erfinder: **Muench, Volker, Dr., Luitpoldstrasse 114,
D-6700 Ludwigshafen (DE)**
Erfinder: **Naarmann, Herbert, Dr., Haardtblick 15,
D-6719 Wattenheim (DE)**
Erfinder: **Penzien, Klaus, Dr., Bensheimer Ring 18,
D-6710 Frankenthal (DE)**

ACTORUM AG

## Beschreibung

Die Erfindung betrifft selbstverlöschende thermoplastische Formmassen, die nach Entzündung mit einer heissen Flamme in wenigen Sekunden verlöschen und nichtbrennend abtropfen.

Thermoplastische Formmassen, die sich zur Herstellung von Formteilen eignen, die schlagfest modifizierte Styrolpolymerisate und Polyphenylenether enthalten und selbstverlöschend sind, sind z.B. aus der DE-AS 20 37 510 und der US-PS 3 809 729 bekannt. Diese Formmassen enthalten zur Flammfestausrüstung sowohl eine aromatische Phosphorkomponente als auch eine aromatische Halogenverbindung. Zwar werden auch ohne Zusatz von Halogenverbindungen unter Verwendung von aromatischen Phosphaten selbstverlöschende Formmassen erhalten, diese besitzen aber eine wesentlich verschlechterte Wärmeformbeständigkeit. Aufgrund der korrosiv wirkenden Verbrennungsgase bei Einsatz von halogenhaltigen Substanzen sind aber halogenfreie selbstverlöschende Formmassen erstrebenswert.

In der DE-OS 2 229 550 sind stabilisierte Formmassen beschrieben aus einer Polystyrolkomponente und einem Polyphenylenether, die ein Phosphit und ein Zinnmercaptid oder ein Metallhypophosphit enthalten. Zur Flammfestausrüstung werden dabei, wie aus dem Beispiel 1 hervorgeht, bromhaltige Verbindungen, Antimonoxid und Triphenylphosphat verwendet. Diese Massen besitzen aber eine wesentlich verringerte Wärmeformbeständigkeit.

Der vorliegenden Erfindung lag daher die Aufgabe zugrunde, thermoplastische Formmassen auf der Grundlage von Styrolpolymerisaten und Polyphenylenethern zu schaffen, die nach Entzündung mit einer heissen Flamme in wenigen Sekunden verlöschen, nichtbrennend abtropfen, halogenfreie Flammschutzzusätze enthalten und eine hohe Wärmeformbeständigkeit besitzen.

Diese Aufgabe wird erfindungsgemäss gelöst durch Formmassen, die als Flammschutzzusatz eine phosphorhaltige Verbindung enthalten, in der der Phosphor die Oxidationsstufe +1 besitzt.

Gegenstand der Erfindung sind dementsprechend selbstverlöschende thermoplastische Formmassen, bestehend aus

A) 100 Gewichtsteilen wenigstens eines Polymerisats einer monovinylaromatischen Verbindung, insbesondere eines Styrolpolymerisats, und vor allem eines schlagfest modifizierten Styrolpolymerisats,
B) 40 bis 560, insbesondere 65 bis 500 Gewichtsteilen eines Polyphenylenethers,
C) 1 bis 25, insbesondere 2 bis 22 Gewichtsteilen einer phosphorhaltigen Verbindung, sowie
D) – gegebenenfalls – üblichen Zusatzstoffen in wirksamen Mengen.

Die erfindungsgemässen Formmassen sind dadurch gekennzeichnet, das der Phosphor in der Verbindung C) die Oxidationsstufe +1 besitzt.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Komponente A) der erfindungsgemässen Formmassen soll wenigstens ein Polymerisat einer monovinylaromatischen Verbindung sein, wobei bis zu 40 Gew.% an Styrol durch andere Comonomere ersetzt sein können. Als monovinylaromatische Verbindungen kommen dabei insbesondere Styrol in Betracht, ferner die Kern- oder Seitenketten-alkylierten Styrole. Vorzugsweise wird aber Styrol allein verwendet. Als Comonomere kommen beispielsweise Acrylnitril, Maleinsäureanhydrid und Ester der Acrylsäure bzw. Methacrylsäure in Frage. Es können auch mehrere Comonomere gleichzeitig verwendet werden. Bei der Komponente A) kann es sich aber auch um schlagfest modifiziertes Polystyrol handeln.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar.

Als Kautschuke werden die üblicherweise für die Schlagfestmodifizierung von Styrolpolymerisaten gebräuchlichen natürlichen oder synthetischen Kautschuke eingesetzt. Geeignete kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur unter −20°C besitzen. Besonders eignen sich Butadien-Polymerisate mit einem 1,4-cis-Gehalt, der zwischen 25 und 98 liegt.

Als Komponente B) kommen Polyphenylenether auf der Basis von in ortho-Position disubstituierten Polyphenylenoxiden in Frage, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff Wasserstoff, Halogen, Kohlenwasserstoffe, die kein α-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt sind dabei Poly(2,6-dimethyl-1,4-phenylen)ether mit einer Grenzviskosität von 0,40–0,65 dl/g (gemessen in Chloroform bei 30°C).

Die Polyphenylenether können z.B. in Gegenwart von komplexbildenden Mitteln wie Kupferbromid und sek. Dibutylamin aus den Phenolen hergestellt werden.

Als Flammschutzzusatz, Komponente C), der erfindungsgemässen Formmassen kommen phosphorhaltige Verbindungen, in denen der Phosphor die Oxidationsstufe +1 besitzt, in Betracht. Geeignet sind z.B. die Hypophosphite, wobei es sich bei den Kationen um Elemente der I., II., III. Hauptgruppe, der I. bis VIII. Nebengruppe des Periodischen Systems, um die Gruppe der Lanthaniden, Germanium, Zinn, Blei, Antimon und Wismut handeln kann.

Unter Periodischem System der Elemente soll das System von Mendelejew verstanden werden, das in dem Lehrbuch «Anorganische Chemie» von F. A. Cotton, G. Wilkinson, Verlag Chemie (1967) wiedergegeben ist.

Des weiteren kommen Doppelphosphite mit der Struktur $CeMe(H_2PO_2)_6$ in Frage, wobei Me = Erbium, Thulium, Ytterbium und Lutenium sein kann. Es können auch komplexe Hypophosphite verwendet werden, wie beispielsweise $Me[Zr(H_2PO_2)_6]$, $Me[Hf(H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphitester, Ester der hypophosphorigen Säure von Diolen, wie z.B. von 1,10-Dodecyldiol.

Ganz besonders geeignet ist Calciumhypophosphit.

Die Mischungen können als Komponente D) weitere Zusatzstoffe, wie Pigmente, Füllstoffe, Oligo- und Polymere, Antistatika, Antioxidantien und Schmiermittel enthalten.

Neben dem Begriff «Oxidationsstufe» können noch andere Begriffe, wie Oxidationszahl, Ladungszahl und ähnliche verstanden werden, wie sie in dem Lehrbuch der anorganischen Chemie von A. F. Hollemann, E. Wiberg, Walter de Gruyter u. Co. (1964, 57.–70. Auflage), S. 166–177, wiedergegeben sind.

Man stellt die erfindungsgemässen thermoplastischen Formmassen wie üblich auf Vorrichtungen, die ein homogenes Mischen zulassen, wie Knetern, Extrudern oder Walzenmischgeräten her.

Neben der Eigenschaft der Selbstverlöschung besitzen die erfindungsgemässen Formmassen noch eine hohe Wärmeformbeständigkeit.

Die Flammschutzprüfung erfolgt im vertikalen Brandtest nach den Vorschriften der Underwriter Laboratories zwecks Einordnung in eine der Brandklassen 94 VE-0, 94 VE-1 oder 94 VE-2.

Die Wärmeformbeständigkeit wird nach Vicat nach DIN 53 460 ermittelt.

Beispiele und Vergleichsversuche

Die in der Tabelle angegebenen Gewichtsteile an Polystyrol, Poly(2,6-dimethyl-1,4-phenylen)ether und an Flammschutzzusatz werden auf einem Zweiwellenextruder bei 300°C geschmolzen, homogenisiert, gemischt und granuliert.

Tabelle

| Beispiele (erfindungsgemäss) | Komponente A Polystyrol (Gewichtsteile) | | Komponente B (Poly(2,6-dimethyl-1,4-phenylen)-ether[1]) (Gewichtsteile) | Komponente C Flammschutz-(Gewichtsteile) | | Brandklasse nach UL-94 | Erweichungspunkt nach Vicat (°C) |
|---|---|---|---|---|---|---|---|
| 1 | Homopolystyrol | 50 | 50 | Calciumhypophosphit | 1 | VE-1 | 150 |
| 2 | Homopolystyrol | 50 | 50 | Calciumhypophosphit | 3 | VE-0 | 150 |
| 3 | Schlagfest modifiziertes Polystyrol[2] | 70 | 30 | Calciumhypophosphit | 6 | VE-1 | 130 |
| 4 | Schlagfest modifiziertes Polystyrol[2] | 60 | 40 | Calciumhypophosphit | 4 | VE-1 | 140 |
| 5 | Schlagfest modifiziertes Polystyrol[2] | 60 | 40 | Calciumhypophosphit | 12 | VE-0 | 140 |
| 6 | Schlagfest modifiziertes Polystyrol[2] | 50 | 50 | Calciumhypophosphit | 4 | VE-1 | 148 |
| 7 | Schlagfest modifiziertes Polystyrol[2] | 50 | 50 | Calciumhypophosphit | 7 | VE-0 | 148 |

Tabelle (Fortsetzung)

| Beispiele (erfindungsgemäss) | Komponente A Polystyrol (Gewichtsteile) | | Komponente B (Poly(2,6-dimethyl-1,4-phenylen)-ether[1]) (Gewichtsteile) | Komponente C Flammschutz-(Gewichtsteile) | | Brandklasse nach UL-94 | Erweichungspunkt nach Vicat (°C) |
|---|---|---|---|---|---|---|---|
| 8 | Schlagfest modifiziertes Polystyrol[2] | 40 | 60 | Calciumhypophosphit | 2 | VE-1 | 159 |
| 9 | Schlagfest modifiziertes Polystyrol[2] | 40 | 60 | Calciumhypophosphit | 4 | VE-0 | 160 |
| 10 | Schlagfest modifiziertes Polystyrol[2] | 30 | 70 | Calciumhypophosphit | 2 | VE-0 | 168 |
| Vergleichsversuche (nicht erfindungsgemäss) | | | | | | | |
| A | Homopolystyrol | 50 | 50 | Triphenylphosphat | 2 | VE-1 | 145 |
| B | Homopolystyrol | 50 | 50 | Triphenylphosphat | 7 | VE-0 | 132 |
| C | Schlagfest modifiziertes Polystyrol[2] | 60 | 40 | Triphenylphosphat | 5 | VE-1 | 127 |
| D | Schlagfest modifiziertes Polystyrol[2] | 60 | 40 | Triphenylphosphat | 10 | VE-0 | 115 |
| E | Schlagfest modifiziertes Polystyrol[2] | 50 | 50 | Triphenylphosphat | 5 | VE-1 | 135 |
| F | Schlagfest modifiziertes Polystyrol[2] | 50 | 50 | Triphenylphosphat | 10 | VE-0 | 123 |
| G[3] | Schlagfest modifiziertes Polystyrol[2] | 60 | 40 | Magnesiumhypophosphit | 12 | VE-0 | 112 |

[1] Poly(2,6-dimethyl-1,4-phenylen)ether mit einer Grenzviskosität von 0,46 dl/g (gemessen bei 30 °C in Chloroform)
[2] Schlagfest modifiziertes Polystyrol mit einem Polybutadiengehalt von 8 Gew.%
[3] enthält noch 10 Gew.-Teile Triisooctylphosphit

**Patentanspruch**

Selbstverlöschende thermoplastische Formmassen, bestehend aus

A) 100 Gewichtsteilen wenigstens eines Polymerisats einer vinylaromatischen Verbindung,
B) 40 bis 560 Gewichtsteilen eines Polyphenylenethers,
C) 1 bis 25 Gewichtsteilen einer phosphorhaltigen Verbindung, sowie

D) – gegebenenfalls – üblichen Zusatzstoffen in wirksamen Mengen,

dadurch gekennzeichnet, dass der Phosphor in der Verbindung C die Oxidationsstufe +1 besitzt.

**Claim**

Self-extinguishing thermoplastic moulding compositions consisting of

A) 100 parts by weight of at least one polymer of a vinylaromatic compound,
B) 40 to 560 parts by weight of a polyphenylene ether,
C) 1 to 25 parts by weight of a phosphorus-containing compound, and
D) optional conventional additives in effective amounts,

wherein the phosphorus in compound C has an oxidation state of +1.

**Revendication**

Matières à mouler thermoplastiques auto-extinguibles, se composant de:

A) 100 parties en poids d'au moins un polymère d'un composé vinylaromatique,

B) 40 à 560 parties en poids d'un éther de polyphénylène,

C) 1 à 25 parties en poids d'un composé phosphoré et

D) le cas échéant – des adjuvants usuels en quantités efficaces, caractérisées en ce que le phosphore dans le composé C a le nombre d'oxydation +1.